# EUROPÄISCHE PATENTSCHRIFT

(11) **EP 2 100 784 B1**
(45) Veröffentlichungstag und Bekanntmachung des Hinweises auf die Patenterteilung: **17.12.2014**
(21) Anmeldenummer: 09100065.3
(22) Anmeldetag: 23.01.2009
(51) Int. Cl.: B60T 8/40

(54) **Hydraulische Fahrzeugbremsanlage**
Hydraulic vehicle braking system
Système hydraulique de freinage pour un véhicule

(30) Priorität: 14.03.2008 DE 102008014462
(43) Veröffentlichungstag der Anmeldung: 16.09.2009
(73) Patentinhaber: ROBERT BOSCH GMBH, 70442 Stuttgart (DE)
(72) Erfinder: Baumann, Dietmar, 71282 Hemmingen (DE); Hofmann, Dirk, 794 01 Krnov-Pod Cvilinem (CZ)

(56) Entgegenhaltungen:
- EP-A1- 0 448 031
- EP-A2- 0 317 182
- WO-A1-96/20102
- WO-A1-98/12086
- DE-A1- 19 513 346
- DE-C1- 19 543 583
- JP-A- 11 048 950
- JP-A- 2000 159 078
- US-A- 5 573 314

## Beschreibung

### Stand der Technik

Die Erfindung betrifft eine hydraulische Fahrzeugbremsanlage mit den Merkmalen de Oberbegriffs des Anspruchs 1.

Derartige Fahrzeugbremsanlagen sind in Kraftfahrzeugen an sich üblich. Sie weisen einen Hauptbremszylinder auf, der per Muskelkraft von einem Fahrzeugführer mittels eines Bremspedals, bei einem Kraftrad auch mit einem Handbremshebel, betätigt wird. An den Hauptbremszylinder sind Radbremszylinder von Radbremsen hydraulisch angeschlossen. Für blockierschutzgeregelte Fahrzeugbremsanlagen sind Bremsdruckaufbauventile und Bremsdruckabsenkventile zu einer Bremsdruckmodulation dem Hauptbremszylinder und den Radbremszylindern zwischengeschaltet, wobei zu einer radindividuellen Bremsdruckmodulation jedem Radbremszylinder ein Bremsdruckaufbauventil und ein Bremsdruckabsenkventil vor- bzw. nachgeschaltet ist. Bei vereinfachten Regelungen können beispielsweise auch für die Radbremsen einer Achse ein Bremsdruckaufbauventil und ein Bremsdruckabsenkventil vorgesehen sein. Des Weiteren ist üblicherweise in jedem Bremskreis eine Hydropumpe als Rückförderpumpe und/oder zum Druckaufbau und des Weiteren ein Hydrospeicher und weitere hydraulische Ventile vorgesehen. Derartige Bremsdruckregelanlagen sind dem Fachmann an sich bekannt und sollen hier nicht weiter erläutert werden, weil sie nicht den eigentlichen Gegenstand der Erfindung bilden.

Üblich sind in Kraftwagen Unterdruckbremskraftverstärker um die Muskelkraft des Fahrzeugführers zu erhöhen. Auch sind elektrohydraulische Bremskraftverstärker und Fremdkraftbremsanlagen bekannt, bei denen beiden eine Fremdenergieversorgung der Fahrzeugbremsanlage mit einer Hydropumpe erfolgt, die mit einem Elektromotor angetrieben wird. Üblich ist eine Zwischenspeicherung von unter Druck stehender Bremsflüssigkeit in einem Hydrospeicher. Im Falle einer Bremskraftverstärkung, also einer sog. Hilfskraftbremsanlage, wird der vom Fahrer per Muskelkraft durch Betätigung des Hauptbremszylinders erzeugte Bremsdruck mit der Fremdenergieversorgung erhöht, im Falle einer Fremdkraftbremsanlage erfolgt der Druckaufbau ausschließlich mit der Fremdenergieversorgung, der Hauptbremszylinder wird hydraulisch von der übrigen Fahrzeugbremsanlage getrennt. Nur bei einer Hilfsbremsung, also einer Notbremsung bei Ausfall der Fremdenergieversorgung, erfolgt die Betätigung per Muskelkraft mit dem Hauptbremszylinder.

Die Japanische Patentanmeldung JP 11-048 950 A offenbart einen Pedalwegmodulator mit einer Kolben-Zylinder-Einheit, die mit einem Hauptbremszylinder kommuniziert und deren Kolben mit einem Elektromotor hin- und herbewegbar ist. Durch Hin- und Herbewegen des Kolbens des Pedalwegmodulators lässt sich Bremsflüssigkeit aus dem Hauptbremszylinder aufnehmen oder in den Hauptbremszylinder verdrängen und dadurch ein Pedalweg des Hauptbremszylinders ändern.

Die europäische Patentanmeldung EP 0 317 182 A2 offenbart eine hydraulische Fahrzeugbremsanlage mit einem Pedalwegmodulator, der eine elektromotorisch antreibbare Kolben-Zylinder-Einheit aufweist, an die Radbremszylinder und über ein Magnetventil ein Hauptbremszylinder angeschlossen sind. Eine Bremsbetätigung erfolgt mit dem Hauptbremszylinder und dem Pedalwegmodulator, so dass Bremsflüssigkeit zu einem Bremsdruckaufbau zeitweise aus dem Hauptbremszylinder verdrängt und zusätzlich vom Pedalwegmodulator geliefert wird. Außer einer Pedalwegverkürzung lässt sich mit dem Pedalwegmodulator eine Radschlupfregelung realisieren.

Die internationale Patentanmeldung WO 96/20102 A1 offenbart eine hydraulische Fahrzeugbremsanlage, mit einem Zweikreis-Hauptbremszylinder, an den ein ebenfalls zweikreisiger Vorladezylinder angeschlossen ist, an den wiederum die hydraulische Fahrzeugbremsanlage angeschlossen ist. Der Hauptbremszylinder weist einen Unterdruck-Bremskraftverstärker auf. Der Vorladezylinder wird pneumatisch durch Unterdruck vergleichbar einem Unterdruck-Bremskraftverstärker betätigt. Der Vorladezylinder weist sog. Schnüffelbohrungen auf, wie sie von Hauptbremszylindern bekannt sind, durch die die beiden Bremskreise des Hauptbremszylinders mit den beiden Bremskreisen des Vorladezylinders kommunizieren. Die Schnüffelbohrungen bilden hydraulische Drosseln für Bremsflüssigkeit, die aus dem Hauptbremszylinder in den Vorladezylinder verdrängt wird. Wie bei einem Hauptbremszylinder sind im Vorladezylinder der bekannten Fahrzeugbremsanlage die Schnüffelbohrungen so angeordnet, dass sie gleich zu Beginn einer Verschiebung von Kolben des Vorladezylinders überfahren werden, so dass der Hauptbremszylinder bei Betätigung des Vorladezylinders hydraulisch von der Fahrzeugbremsanlage getrennt wird. Die Fahrzeugbremsanlage ist entweder bei unbetätigtem Vorladezylinder mit dem Hauptbremszylinder oder mit dem Vorladezylinder, nicht jedoch mit dem Hauptbremszylinder und dem Vorladezylinder gemeinsam betätigbar.

### Offenbarune der Erfindung

Die erfindungsgemäße hydraulische Fahrzeugbremsanlage mit den Merkmalen des Anspruchs 1 geht einen anderen Weg: Sie weist wie herkömmliche hydraulische Fahrzeugbremsanlagen einen Hauptbremszylinder auf, an den die Fahrzeugbremsanlage hydraulisch angeschlossen ist und mit dem sie per Muskelkraft vom Fahrzeugführer betätigt wird. Des Weiteren weist die erfindungsgemäße hydraulische Fahrzeugbremsanlage einen elektrohydraulischen Pedalwegmodulator mit einer Kolben-Zylinder-Einheit auf, die mit dem Hauptbremszylinder kommuniziert und die einen elektromechanischen Antrieb aufweist. Durch Betätigung der Kolben-Zylinder-Einheit des Pedalwegmodulators wird Bremsflüssigkeit aus der Kolben-Zylinder-Einheit verdrängt und gelangt in den Hauptbremszylin-der bzw. in die Fahrzeugbremsanlage. Dadurch wird ein zu einer Bremsbetätigung erforderlicher Betätigungsweg, also eine Verschiebung eines Kolbens des Hauptbremszylinders verkürzt. Der Fahrzeugführer übt über das Bremspedal, den Bremshebel oder ein sonstiges Bedienelement nur einen Teil des Betätigungswegs aus und verdrängt damit ein bestimmtes Bremsflüssigkeitsvolumen aus dem Hauptbremszylinder in die Fahrzeugbremsanlage. Ein weiteres Bremsflüssigkeitsvolumen liefert der Pedalwegmodulator. Es erfolgt keine Kraftverstärkung, der Druck im Hauptbremszylinder und in den Radbremsen wird vom Pedalwegmodulator nicht erhöht.

Die Verschiebung des Kolbens im Zylinder der Kolben-Zylinder-Einheit des Pedalwegmodulators, also das aus der Kolben-Zylinder-Einheit verdrängte und der Fahrzeugbremsanlage zugeführte Bremsflüssigkeitsvolumen wird in Abhängigkeit eines Wegs des Bremspedals, also in Abhängigkeit von einer Verschiebung des Kolbens des Hauptbremszylinders, gesteuert oder geregelt. Dabei ist verallgemeinert unter Bremspedal auch ein Handbremshebel oder ein sonstiges Bedienelement zum Verschieben des Kolbens des Hauptbremszylinders zu verstehen. Der Pedalwegmodulator bewirkt sozusagen eine Wegübersetzung des Bremspedals bzw. vergrößert das verdrängte Bremsflüssigkeitsvolumen ohne die erforderliche Muskelkraft zu erhöhen. Die Abhängigkeit kann, muss aber nicht linear sein, so dass sich als weiterer Vorteil mit dem erfindungsgemäßen Pedalwegmodulator eine an sich beliebige Pedalcharakteristik erzielen lässt, wobei mit Pedalcharakteristik die Abhängigkeit des Pedalwegs von der Pedalkraft gemeint ist. Eine Kraftverstärkung lässt sich durch die hydraulische Übersetzung vom Hauptbremszylinder zu den Radbremsen erzielen, indem der Bohrungs- und Kolbendurchmesser des Hauptbremszylinders verkleinert und/oder die Kolbendurchmesser der Radbremszylinder vergrößert werden. Ein Unterdruck- oder sonstiger Bremskraftverstärker ist entbehrlich und erfindungsgemäß nicht vorgesehen. Bei einem Ausfall des Pedalwegmodulators ist eine Hilfsbremsung ausschließlich per Muskelkraft möglich, wobei sich die Pedalkraft durch den Ausfall des Pedalwegmodulators nicht erhöht, sondern nur der Pedalweg sich verlängert.

Erfindungsgemäß ist der Kolben-Zylinder-Einheit des Pedalwegmodulators und dem Hauptbremszylinder ein Magnetventil mit einer Drossel zwischengeschaltet, das bei einem Ausfall des Pedalwegmodulators den Hauptbremszylinder durch die Drossel mit dem Pedalwegmodulator verbindet und einen Bremsflüssigkeitsstrom aus dem Hauptbremszylinder in den Pedalwegmodulator drosselt. Dadurch wird bei Ausfall des Pedalwegmodulators während einer Bremsung eine Bewegung eines Bremspedals gebremst, damit das Bremspedal nicht "durchfällt", einem Fahrzeugführer wird der Schreck des Gefühls eines Totalausfalls der Fahrzeugbremsanlage erspart. Bei normalem Betrieb ist das Ventil geöffnet und verbindet den Hauptbremszylinder ohne Wirkung der Drossel mit dem Pedalwegmodulator.

Die Unteransprüche haben vorteilhafte Ausgestaltungen und Weiterbildungen der im Anspruch 1 angegebenen Erfindung zum Gegenstand.
Der Antrieb der Kolben-Zylinder-Einheit des Pedalwegmodulators kann beispielsweise mit einem Linearmotor, einem Elektromagneten oder einem Piezoelement erfolgen. Anspruch 2 sieht einen elektromechanischen Antrieb mit einem Elektromotor und einem mechanischen Getriebe vor, das die drehende Antriebsbewegung des Elektromotors in eine translatorische Bewegung zum Verschieben des Kolbens im Zylinder der Kolben-Zylinder-Einheit wandelt und vorzugsweise ein Untersetzungsgetriebe beinhaltet. Da die Erfindung eine hydraulische Kraftübersetzung vom Pedalwegmodulator zum Hauptbremszylinder bzw. den Radbremszylindern ermöglicht, kommt die Erfindung mit einer vergleichsweise kleinen mechanischen Untersetzung oder auch ganz ohne Untersetzungsgetriebe aus.

Anspruch 4 sieht mindestens eine selbstverstärkende Radbremse der erfindungsgemäßen Fahrzeugbremsanlage vor. Vorzugsweise sind die Bremsen einer Achse bauartgleich, also entweder selbstverstärkend oder nicht selbstverstärkend, es können alle Radbremsen selbstverstärkend sein. Es sind hydraulische und mechanische Selbstverstärkungseinrichtungen bekannt, worauf hier nicht näher eingegangen werden soll. Für mechanische Selbstverstärkungseinrichtungen sind Keil- oder Rampenmechanismen bekannt, an denen sich ein Reibbremsbelag einer Scheibenbremse in Umfangsrichtung der Bremsscheibe verschieblich abstützt. Die drehende Bremsscheibe beaufschlagt den Reibbremsbelag in einen enger werdenden Keilspalt zwischen der schrägen Keil- oder Rampenfläche und der Bremsscheibe, wobei aufgrund des Keilprinzips eine Bremskraftverstärkung erfolgt. Insbesondere sieht Anspruch 5 eine wegverstärkende Selbstverstärkungseinrichtung vor, bei der nicht die Kraft verstärkt, sondern der Weg, also die Zustellung des Reibbremsbelags zur Bremsscheibe, vergrößert wird. Hierzu stützt sich der Keil- oder Rampenmechanismus am Kolben der hydraulischen Radbremse ab, so dass die Andruckkraft des Reibbremsbelags gegen die Bremsscheibe gleichgroß wie die vom Bremskolben erzeugte Spannkraft ist. Die Abstützung des Reibbremsbelags in einem Winkel schräg zur Bremsscheibe bewirkt eine Zustellung des Reibbremsbelags, also eine Wegübersetzung. Dies ist dem Fachmann an sich bekannt und soll deswegen und weil die konstruktive Ausgestaltung der Selbstverstärkungseinrichtung der Radbremse/n nicht den eigentlichen Gegenstand der Erfindung bildet hier nicht näher ausgeführt werden. Die Selbstverstärkungseinrichtungen sind nicht auf die angesprochenen Bauarten beschränkt.

### Kurze Beschreibung der Zeichnung

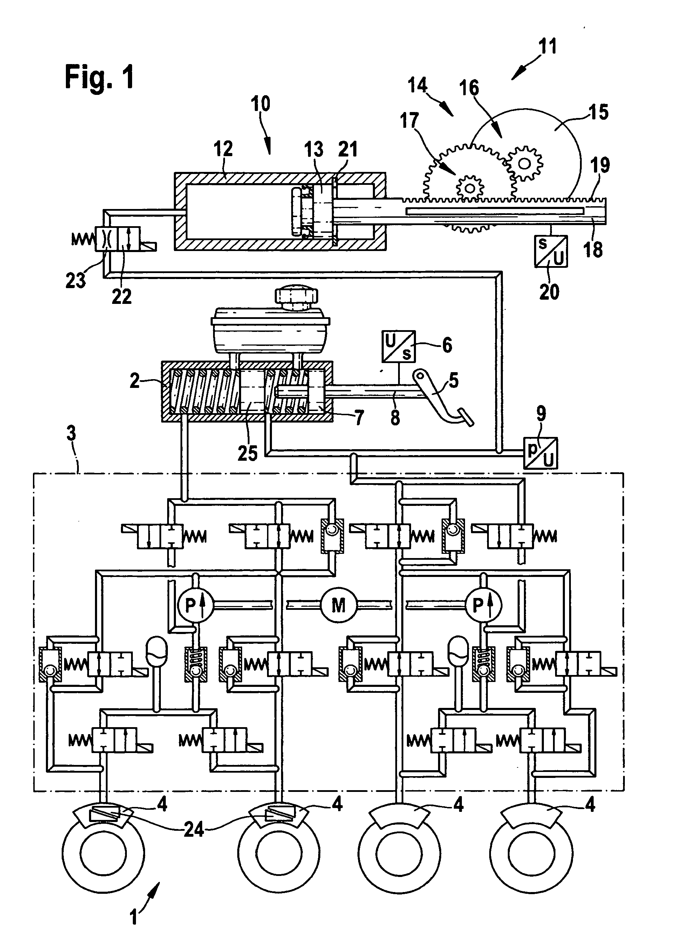

Die Erfindung wird anhand eines in der Zeichnung dargestellten Ausführungsbeispiels näher erläutert. Figur 1 zeigt eine schematisierte Darstellung einer erfindungsgemäßen Fahrzeugbremsanlage.

### Ausführungsform der Erfindung

Die in Figur 1 dargestellte, insgesamt mit 1 bezeichnete Fahrzeugbremsanlage gemäß der Erfindung weist einen Zweikreis-Hauptbremszylinder 2 auf, an den über eine hydraulische Blockierschutz- und Schlupfregeleinheit 3 Radbremsen 4 angeschlossen sind. Die Schlupfregeleinheit 3 ist von an sich bekannter Bauart, es kann beispielsweise das ESP System 8.0 der Anmelderin Verwendung finden, das eine radindividuelle Bremsdruckregelung ermöglicht. Solche Blockierschutz- und Schlupfregeleinrichtungen sind dem Fachmann bekannt, so dass auf seine Erläuterung hier verzichtet werden kann.

Der Hauptbremszylinder 2 und mit ihm die Fahrzeugbremsanlage 1 wird per Muskelkraft mit einem Bremspedal 5 betätigt. Bei einer Handbremse wäre ein Bremshebel als Bedienelement anstelle des Bremspedals 5 vorgesehen. Mit einem Wegsensor 6 wird ein Pedalweg des Bremspedals 5 oder ein Kolbenweg eines Stangenkolbens 7 des Hauptbremszylinders 2, der über eine Kolbenstange 8 mechanisch mit dem Bremspedal 5 verbunden ist, gemessen. An einen der beiden Bremskreise der Fahrzeugbremsanlage 1 ist ein Drucksensor 9 angeschlossen.

Eine Betätigung der Fahrzeugbremsanlage 1 erfolgt in üblicher Weise durch Niedertreten des Bremspedals 5, also durch eine Betätigung des Hauptbremszylinders 2, aus dem dadurch Bremsflüssigkeit verdrängt wird, die einen Bremsdruck in Radbremszylindern der Radbremsen 4 aufbaut, die mit dem Hauptbremszylinder 2 kommunizieren. Eine radindividuelle Bremsdruckregelung in den Bremszylindern der Radbremsen 4 erfolgt bei Bedarf automatisch mit der hydraulischen Blockierschutz- und Schlupfregeleinheit 3.

Ein Kreis des Hauptbremszylinders 2, im Ausführungsbeispiel ist es der Stangenkreis, kommuniziert mit einer Kolben-Zylinder-Einheit 10 eines Pedalwegmodulators 11. Die Kolben-Zylinder-Einheit 10 des Pedalwegmodulators 11 weist einen Zylinder 12 auf, in dem ein Modulatorkolben 13 verschiebbar ist. Der Pedalwegmodulator 11 weist einen elektromechanischen Antrieb 14 mit einem Elektromotor 15 auf, der über ein Zahnrad-Untersetzungsgetriebe 16 und ein Zahnstangengetriebe 17 den Modoulatorkolben 13 im Zylinder 12 verschiebt. Eine Kolbenstange 18 des Modulatorkolbens 13 weist eine Zahnstange 19 auf, die Teil des Zahnstangengetriebes 17 ist.

Durch Antrieb des Modulatorkolbens 13 wird Bremsflüssigkeit aus dem Zylinder 12 der Kolben-Zylinder-Einheit 10 des Pedalwegmodulators 11 in den Stangenkreis des Hauptbremszylinders 2 bzw. der Fahrzeugbremsanlage 1 verdrängt. Der hydraulische Druck wird dadurch nicht erhöht, dieser ist ausschließlich bestimmt durch die auf das Bremspedal 5 ausgeübte Muskelkraft, die auf den Stangenkolben 7 des Hauptbremszylinders 2 wirkt. Das vom Pedalwegmodulator 11 zur Verfügung gestellte Bremsflüssigkeitsvolumen verkürzt allerdings den Pedalweg, der zum Aufbau einer bestimmten Bremskraft erforderlich ist, es erfolgt also sozusagen eine Art hydraulische Wegübersetzung mittels des Pedalwegmodulators 11. Dadurch ist eine größere hydraulische Kraftübersetzung durch einen kleineren Durchmesser der Kolben des Hauptbremszylinders 2 im Verhältnis zu den Kolben in den Radbremszylindern der Radbremsen 4 möglich, wodurch wiederum ein Bremskraftverstärker, beispielsweise ein Unterdruck-Bremskraftverstärker, entbehrlich ist.

Gesteuert oder geregelt wird der Pedalwegmodulator 11 in Abhängigkeit vom Pedalweg des Bremspedals 5, der mit dem Wegsensor 6 gemessen wird. Die Steuerung oder Regelung des Pedalwegmodulators 11 erfolgt mit einem nicht dargestellten elektronischen Steuergerät, das vorzugsweise zugleich auch die hydraulische Blockierschutz- und Schlupfregeleinheit 3, also das ESP-Gerät steuert. Mit anderen Worten kann die Steuerung oder Regelung des Pedalwegmodulators 11 in das ohnehin vorhandene Steuergerät der hydraulischen Blockierschutz- und Schlupfregeleinheit 3 integriert sein. Die Steuerung oder Regelung des Pedalwegmodulators 11 kann in linearer oder auch anderer, grundsätzlich beliebiger Abhängigkeit vom Pedalweg erfolgen. Der Pedalwegmodulator 11 weist einen Wegsensor 20 zur Messung der Verschiebung des Modulatorkolbens 13 auf. Dadurch lässt sich eine an sich beliebige Pedalcharakteristik verwirklichen, wobei mit Pedalcharakteristik die Abhängigkeit des Pedalwegs des Bremspedals 5 von der auf das Bremspedal 5 ausgeübten Muskelkraft gemeint ist.

Bei Ausfall des Pedalwegmodulators 11 erfolgt eine Bremsung ausschließlich per Muskelkraft in gewohnter Weise durch Niedertreten des Bremspedals 5. Da der Pedalwegmodulator 11 keine Kraftverstärkung, sondern eine Wegübersetzung bewirkt, ist die zur Betätigung der Fahrzeugbremsanlage 1 erforderliche Betätigungskraft, also die auf das Bremspedal 5 auszuübende Muskelkraft, nicht erhöht, es verlängert sich lediglich der Pedalweg. Der Modulatorkolben 13 weist eine Kolbenrückhubbegrenzung auf, die seine Grundstellung bei nicht betätigter, sondern gelöster Fahrzeugbremsanlage 1 festlegt. Im Ausführungsbeispiel ist ein Federring 21 in eine Nut des Zylinders 12 der Kolben-Zylinder-Einheit des Pedalwegmodulators 11 als Kolbenrückhubbegrenzung 21 eingesetzt. Die Kolbenrückhubbegrenzung verhindert, dass bei Ausfall des Pedalwegmodulators 11 Bremsflüssigkeit bei einer Bremsbetätigung aus dem Hauptbremszylinder 2 in den Zylinder 12 der Kolben-Zylinder-Einheit 10 des Pedalwegmodulators 11 verdrängt wird. Bei Ausfall des Pedalwegmodulators 11 steht die bei Betätigung wird. Bei Ausfall des Pedalwegmodulators 11 steht die bei Betätigung aus dem Hauptbremszylinder 2 verdrängte Bremsflüssigkeit vollständig für die Betätigung der Radbremsen 4 zur Verfügung und es geht keine Bremsflüssigkeit in den Zylinder 12 der Kolben-Zylinder-Einheit 10 des Pedalwegmodulators 11 "verloren". Die Kolbenrückhubbegrenzung 21 legt eine definierte Grundstellung des Modulatorkolbens 13 bei nicht betätigter Fahrzeugbremsanlage 1 fest, eine Verschiebung der Grundstellung und eine Veränderung der Pedalcharakteristik, werden verhindert.

Da der Pedalwegmodulator 11 nur auf einen der beiden Bremskreise der Fahrzeugbremsanlage 1 wirkt, bleibt die hydraulische Trennung der beiden Bremskreise gewährleistet.

Der Kolben-Zylinder-Einheit 10 des Pedalwegmodulators 11 und dem Hauptbremszylinder 2 bzw. der Fahrzeugbremsanlage 1 ist ein Ventil 22 zwischengeschaltet. Im Ausführungsbeispiel handelt es sich um ein 2/2-Wege-Magnetventil, das in seiner stromlosen Grundstellung die Kolben-Zylinder-Einheit 10 durch eine Drossel 23 mit dem Hauptbremszylinder 2 und der Fahrzeugbremsanlage 1 verbindet. In einer bestromten Schaltstellung ist das Ventil 22 offen, verbindet also die Kolben-Zylinder-Einheit 10 des Pedalwegmodulators 11 mit dem Hauptbremszylinder 2 und der Fahrzeugbremsanlage 1. Bei normalem Betrieb ist das Ventil 22 bestromt, d. h. geöffnet, das Öffnen erfolgt beispielsweise mit Einschalten einer Zündung eines Kraftfahrzeugs. Bei Ausfall der Stromversorgung oder des Pedalwegmodulators 11 schaltet das Ventil 22 in die stromlose Grundstellung um. Erfolgt der Ausfall während einer Bremsung bei betätigtem Hauptbremszylinder 2, drosselt die Drossel 23 des Ventils 22 den Strom der Bremsflüssigkeit aus dem Hauptbremszylinder 2 in den Zylinder 12 der Kolben-Zylinder-Einheit 10 des Pedalwegmodulators 11, damit das Bremspedal 5 nicht "durchfällt", sondern langsam nachgibt und dem Fahrzeugführer den Schreck des Gefühls eines Total-ausfalls der Fahrzeugbremsanlage 1 erspart. Der Ausfall des Pedalwegmodulators 11 ist durch Bewegungslosigkeit des Modulatorkolbens 13 feststellbar, die mit dem Wegsensor 20 gemessen wird. Da das Ventil 22 nur äußerst selten, nämlich beim Ein- und beim Ausschalten der Zündung umgeschaltet wird, ist es sehr langlebig.

In bevorzugter Ausführungsform der Erfindung ist ein Teil der Radbremsen 4 oder sind alle Radbremsen 4 selbstverstärkend. Vorzugsweise sind die Radbremsen 4 einer, mehrerer oder aller Fahrzeugachsen selbstverstärkend, wegen der höheren Bremsleistung sind bevorzugt die Radbremsen 4 einer Vorderachse selbstverstärkend. In der Zeichnung ist die Selbstverstärkung der beiden links gezeichneten Radbremsen 4 durch das Symbol eines Keilmechanismus 24 angedeutet. Selbstverstärkende Radbremsen sind dem Fachmann bekannt, so dass eine nähere Erläuterung nicht notwendig ist. Es sind u. a. hydraulische- und mechanische Selbstverstärkungseinrichtungen bekannt, letztere insbesondere mit Keil- oder Rampenmechanismen, die einen in Umfangsrichtung einer Bremsscheibe verschieblichen Reibbremsbelag schräg zur Bremsscheibe abstützen. Bevorzugt für die Erfindung sind wegverstärkende Radbremsen 4, bei denen ein Teil eines Zustellwegs der Reibbremsbeläge zur Bremsscheibe durch die Verschiebung des Reibbremsbelags in Drehrichtung der Bremsscheibe bei betätigter Radbremse 4 aufgrund der schrägen Abstützung im Bremssattel mit dem Keil- oder Rampenmechanismus erfolgt. Dadurch verringert sich das zur Bremsbetätigung erforderliche Bremsflüssigkeitsvolumen, das aus dem Hauptbremszylinder 2 verdrängt werden muss; es verkürzt sich der erforderliche Pedalweg. Die Pedalwegverkürzung ergibt sich auch, wenn nur ein Teil der Radbremsen 4 selbstverstärkend (wegverstärkend) ist, es ist nicht notwendig, dass alle Radbremsen 4 selbstverstärkend sind. Über den Schwimmkolben 25 des Hauptbremszylinders 2 wirkt die Wegverstärkung auch auf den jeweils anderen Bremskreis der Fahrzeugbremsanlage 1.

Ein kleiner Durchmesser des Modulatorkolbens 13 führt zu einer hohen Weguntersetzung und Kraftübersetzung, wodurch eine kleine Weguntersetzung des mechanischen Zahnradgetriebes 16, u. U. sogar ein Entfall des Zahnradgetriebes 16 und ein Direktantrieb der Kolbenstange 18 über das Zahnstangengetriebe 17 mit dem Elektromotor 15 möglich ist.

## Patentansprüche

1. Hydraulische Fahrzeugbremsanlage, mit einem Hauptbremszylinder (2) zu ihrer Betätigung und mit einem elektrohydraulischen Pedalwegmodulator (11), der eine Kolben-Zylinder-Einheit (10) aufweist, die mit dem Hauptbremszylinder (2) kommuniziert und die einen elektromechanischen Antrieb (14) aufweist, **dadurch gekennzeichnet, dass** der Kolben-Zylinder-Einheit (10) des Pedalwegmodulators (11) und dem Hauptbremszylinder (2) ein Magnetventil (22) mit einer Drossel (23) zwischengeschaltet ist, das in einer stromlosen Grundstellung die Kolben-Zylinder-Einheit (10) durch die Drossel (23) und in einer bestromten Schaltstellung ohne die Drossel (23) mit dem Hauptbremszylinder (2) verbindet.

2. Hydraulische Fahrzeugbremsanlage nach Anspruch 1, **dadurch gekennzeichnet, dass** der elektromechanische Antrieb (14) des Pedalwegmodulators (11) einen Elektromotor (15) und ein mechanisches Getriebe (16, 17) aufweist.

3. Hydraulische Fahrzeugbremsanlage nach Anspruch 1, **dadurch gekennzeichnet, dass** die Kolben-Zylinder-Einheit (10) des Pedalwegmodulators (11) eine Kolbenrückhubbegrenzung (21) aufweist, die einen Rückhub eines Modulatorkolbens (13) der Kolben-Zylinder-Einheit (10) im Sinne eines Lösens der Fahrzeugbremsanlage (1) begrenzt, und dass der Modulatorkolben (13) in einer nicht betätigten Grundstellung bei gelöster Fahrzeugbremsanlage (1) an der Kolbenrückhubbegrenzung (21) anliegt.

4. Hydraulische Fahrzeugbremsanlage, nach Anspruch 1, **dadurch gekennzeichnet, dass** die Fahrzeugbremsanlage (1) mindestens eine selbstverstärkende Radbremse (4) aufweist.

5. Hydraulische Fahrzeugbremsanlage nach Anspruch 4, **dadurch gekennzeichnet, dass** die Fahrzeugbremsanlage (1) mindestens eine wegverstärkende Radbremse (4) aufweist.

## Claims

1. Hydraulic vehicle braking system, having a brake master cylinder (2) for actuating it and having an electrohydraulic pedal travel modulator (11) which has a piston/cylinder unit (10) which communicates with the brake master cylinder (2) and which has an electromechanical drive (14), **characterized in that** a solenoid valve (22) having a throttle (23) is connected between the piston/cylinder unit (10) of the pedal travel modulator (11) and the brake master cylinder (2), which solenoid valve (22) connects the piston/cylinder unit (10) through the throttle (23) in a de-energized basic position and without the throttle (23) in an energized switching position to the brake master cylinder (2).

2. Hydraulic vehicle braking system according to Claim 1, **characterized in that** the electromechanical drive (14) of the pedal travel modulator (11) has an electric motor (15) and a mechanical gear mechanism (16, 17).

3. Hydraulic vehicle braking system according to Claim 1, **characterized in that** the piston/cylinder unit (10) of the pedal travel modulator (11) has a piston return-stroke limiting means (21) which limits a return stroke of a modulator piston (13) of the piston/cylinder unit (10) in the direction of a release of the vehicle braking system (1), and **in that** the modulator piston (13) bears against the piston return-stroke limiting means (21) in a non-actuated basic position when the vehicle braking system (1) is released.

4. Hydraulic vehicle brake system according to Claim 1, **characterized in that** the vehicle braking system (1) has at least one self-boosting wheel brake (4).

5. Hydraulic vehicle braking system according to Claim 4, **characterized in that** the vehicle braking system (1) has at least one travel-boosting wheel brake (4).

## Revendications

1. Système hydraulique de freinage pour véhicule, comprenant un maître-cylindre de frein (2) pour son actionnement et comprenant un modulateur de course de pédale électrohydraulique (11) qui comprend une unité piston-cylindre (10) qui est en communication avec le maître-cylindre de frein (2) et qui comprend un entraînement électromécanique (14), **caractérisé en ce qu'**une électrovanne (22) comprenant un étranglement (23) est connectée entre l'unité piston-cylindre (10) du modulateur de course de pédale (11) et le maître-cylindre de frein (2), laquelle électrovanne, dans une position de base sans courant, raccorde l'unité piston-cylindre (10) au maître-cylindre de frein (2) au moyen de l'étranglement (23) et, dans une position de commutation alimentée en courant, raccorde l'unité piston-cylindre (10) au maître-cylindre de frein (2) sans l'étranglement (23).

2. Système hydraulique de freinage pour véhicule selon la revendication 1, **caractérisé en ce que** l'entraînement électromécanique (14) du modulateur de course de pédale (11) comprend un moteur électrique (15) et une transmission mécanique (16, 17).

3. Système hydraulique de freinage pour véhicule selon la revendication 1, **caractérisé en ce que** l'unité piston-cylindre (10) du modulateur de course de pédale (11) comprend une limitation de course de retour de piston (21) qui limite une course de retour d'un piston de modulateur (13) de l'unité piston-cylindre (10) dans le sens d'un desserrement du système de freinage pour véhicule (1), et **en ce que** le piston de modulateur (13) s'applique contre la limitation de course de retour de piston (21) dans une position de base non actionnée lorsque le système de freinage pour véhicule (1) est desserré.

4. Système hydraulique de freinage pour véhicule selon la revendication 1, **caractérisé en ce que** le système de freinage pour véhicule (1) comprend au moins un frein de roue (4) à auto-amplification.

5. Système hydraulique de freinage pour véhicule selon la revendication 4, **caractérisé en ce que** le système de freinage pour véhicule (1) comprend au moins un frein de roue (4) à amplification de la course.
